# EUROPEAN PATENT APPLICATION

(11) **EP 4 588 827 A1**
(43) Date of publication of application: **23.07.2025**
(21) Application number: 24153027.8
(22) Date of filing: 22.01.2024
(51) Int. Cl.: B65G 1/04, B66C 13/06

(54) **A ROBOTIC VEHICLE**

(71) Applicant: AUTOSTORE TECHNOLOGY AS, 5578 Nedre Vats (NO)
(72) Inventor: ENGELSGJERD, Svein, 5578 Nedre Vats (NO); SKÅLERUD, Amund, 5578 Nedre Vats (NO); STRØMME, Erik, 5578 Nedre Vats (NO)
(74) Representative: Kilburn & Strode LLP

(57) **Abstract**

The disclosure relates to a robotic vehicle (202) for handling storage containers in a container storage and retrieval system. The robotic vehicle (202) comprising a gripping device (510) configured to releasably engage a storage container. The robotic vehicle comprises a first lifting device (520) configured to raise and lower the gripping device. The first lifting device comprises a first electrical motor (528) configured to provide power to raise and lower the gripping device (510). The robotic vehicle comprises a second lifting device (540) configured to raise and lower the first lifting device (520). The second lifting device comprises a second electrical motor (548) configured to provide power to raise and lower the first lifting device (520). The disclosure also relates to an auxiliary lifting device (520) for use with a robotic vehicle having a principal lifting device.

## Description

### TECHNICAL FIELD

The disclosure relates to a robotic vehicle. More particularly, it relates to a robotic vehicle comprising two or more lifting devices and corresponding container storage and retrieval systems, methods and computer-readable media.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some automated and storage retrieval systems, the stacked containers are arranged in discrete sections that cannot be traversed by the robots, e.g. on different stories within a building or on a mezzanine level. This creates a division between the sections that limits the passing of containers across the division, e.g. requiring manual intervention to remove a container from one section and supply it to a different section, or having additional infrastructure such as conveyors and lift columns to transport containers between the different sections.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a robotic vehicle having both a first lifting device and a second lifting device;
Fig. 6 shows schematic cross-sectional view of the first and second lifting devices as shown in Fig. 5;
Fig. 7 shows a robotic vehicle having both a first lifting device and a second lifting device ;
Fig. 8 shows an automated container storage and retrieval system; and
Fig. 9 shows a method of operating a robotic vehicle;
Fig. 10 shows an auxiliary lifting device configured to be handled by a robotic vehicle in the container storage and retrieval system;
Fig. 11 shows a method of operating the auxiliary lifting device of Fig. 10.

### DETAILED DESCRIPTION

In overview, the disclosure relates to a robotic vehicle for handling storage containers, such as bins, by lifting them out of the stacks, transporting them across the system and lowering into another stack or other part of the system. The robotic vehicle grips a storage container using a gripping device which is raised and lowered, relative to the rest of the robotic vehicle, by a first lifting device. The first lifting device can also be raised and lowered, relative to the rest of the robotic vehicle, by a second lifting device. For example, the lifting mechanisms of the first and second lifting devices may be such that the gripping device is suspended below the first lifting device on bands, such as wires or strips of any suitable material, that are retracted or let out to raise or lower the gripping device, respectively, and likewise for the first lifting device suspended below the second lifting device on bands. When the first lifting device is raised or lowered, this also raises and lowers the gripping device and, if present, a storage container held by the gripping device. As such, a robotic vehicle with a multi-stage lifting apparatus is provided. A robotic vehicle with both the first and second lifting devices has a greater lift depth than a robotic vehicle with only a single lifting device. This provides a robotic vehicle that can service a container storage and retrieval system with higher stacks of container, and therefore a greater overall volume of stock that can be stored. The disclosure also relates to an auxiliary lifting device that can be picked up or deposited by a robotic vehicle with a single lifting device to create a multi-stage lifting apparatus. Using an auxiliary lifting device means that the added weight of an extra lifting device is not carried by the robotic vehicle until it needs the extra lifting depth, and one auxiliary lifting device can be used by many different robotic vehicles as and when they require it.

The greater lift depth provided by using both a first lifting device and a second lifting device also enables the transfer of a storage container between sections of the container storage and retrieval system on different levels. For example, a first section of the system on a higher level than a second section on a lower level can be connected through a hole in the floor of the higher level, at a location above part of the second section. By utilising the greater lift depth, a robotic vehicle on the higher level can pass a storage container below the depth of the stacks on the higher level, through the hole and into a stack on the lower level.

Using a first lifting device with a second lifting device that is configured to raise and lower the first lifting device provides a stable and reliable lifting apparatus, e.g., compared to a single lifting device with double the length of lifting bands. This is because using two lifting devices rather than one with longer lifting bands reduces instability caused by waves propagating up and down the lifting bands. Another cause of unreliability of longer lifting bands is variation in the loads experienced by lifting bands when there is a long distance down to the object being lifted, e.g., due to the load swaying, which can lead to unequal retraction rates between lifting bands and tilting the gripping device and storage container being lifted. Using two lifting devices maintains a more equal tension in lifting bands which provides stability and reliability.

The first lifting device has a first electrical motor to provide power for raising and lowering the gripping device. The second lifting device has a second electrical motor (which may have other functions for the robotic vehicle) to provide power for raising and lowering the first lifting device. This means that the first and second lifting devices can be operated independently and, optionally, simultaneously. This provides the robotic vehicle with two pathways to raise or lower the gripping device according to the specific requirements at a given time. For example, if the first and second lifting devices have separate electrical power supplies, the robotic vehicle can choose to use either the first or second lifting device according to which power supply has more available charge or a greater available output power. The multi-stage lifting apparatus also has a greater top speed of raising or lowering than a comparative single lifting device, as both lifting devices can be used simultaneously. Therefore the overall time for the robotic vehicle to store or deposit a bin in the system is reduced.

### Automated storage and retrieval system overview

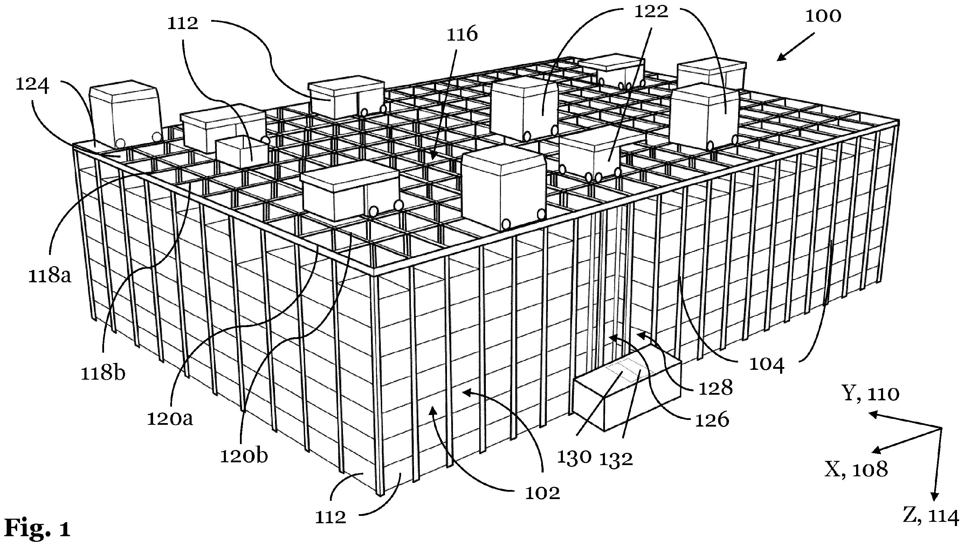

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

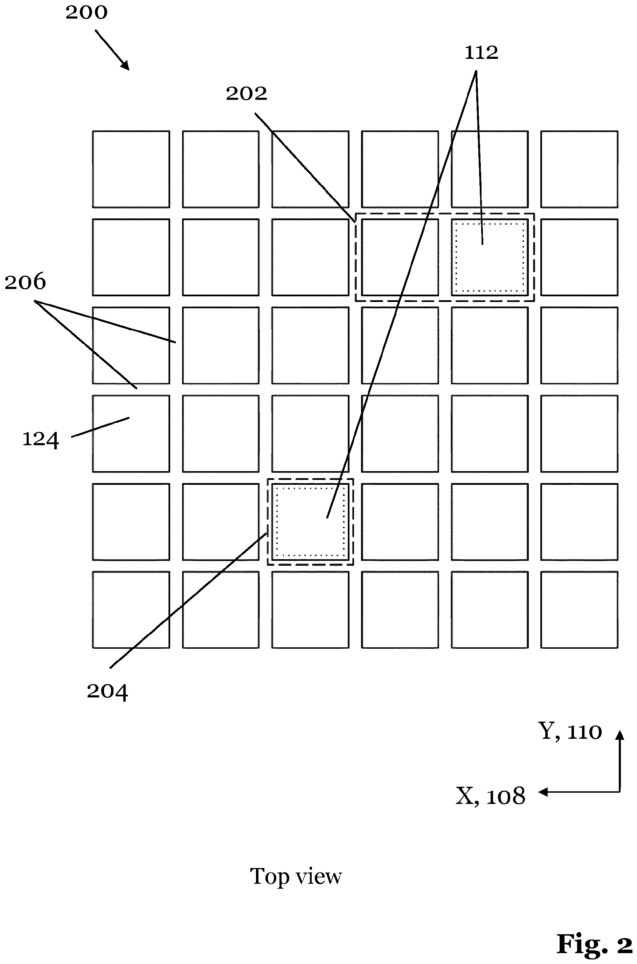

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

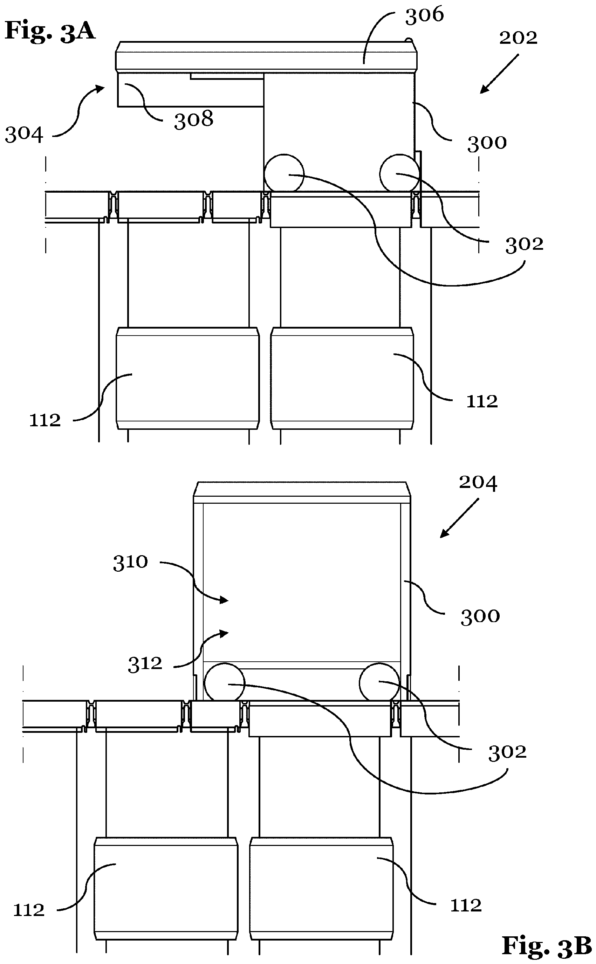

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

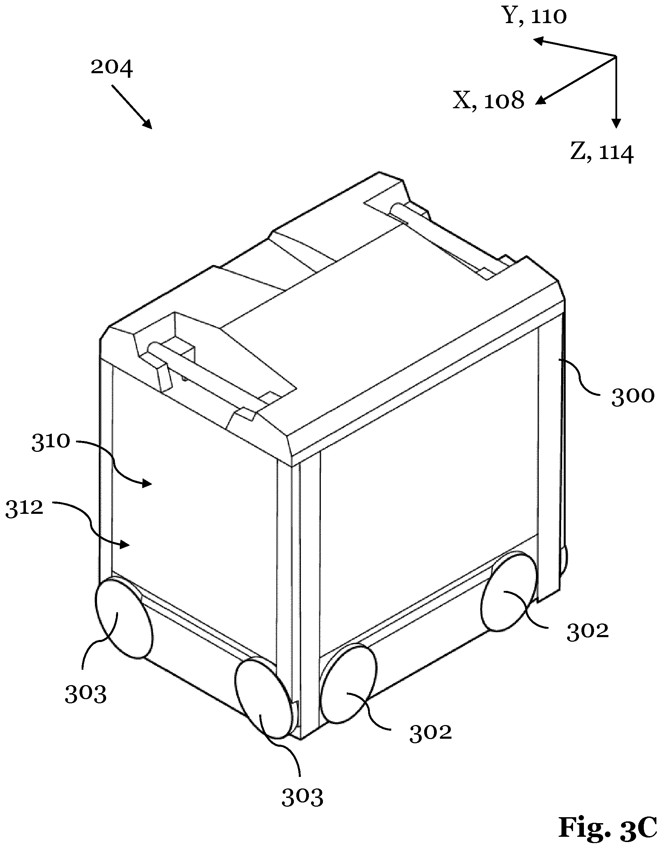

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

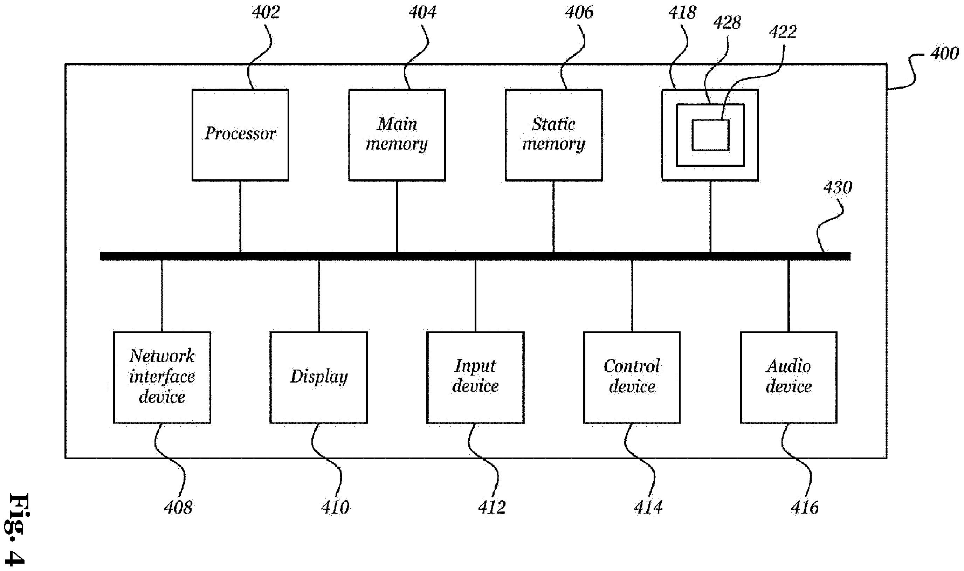

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements to lifting apparatus

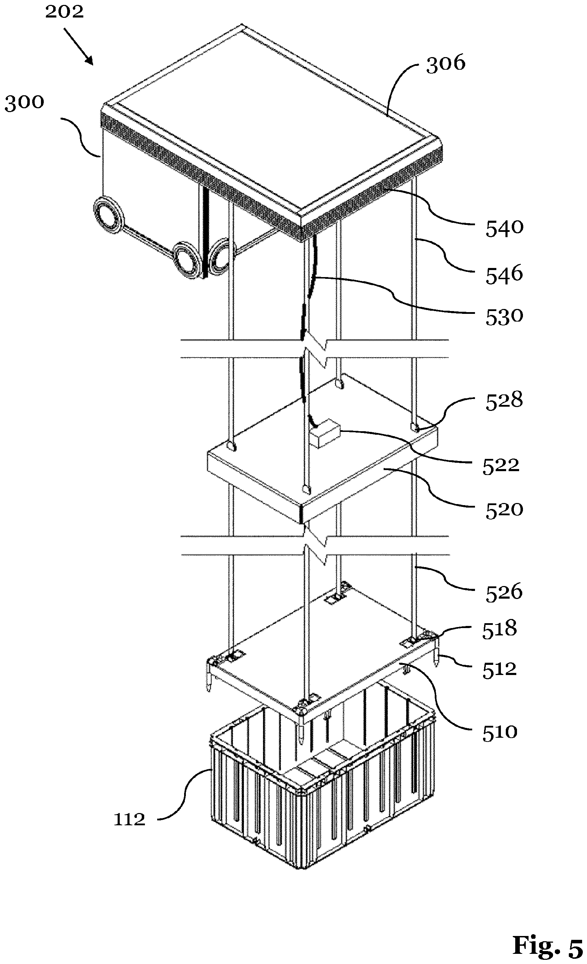

With reference to Fig. 5, a robotic vehicle 202 has a body 300 and a cantilever arm 306, as described above with reference to Fig. 3A. The robotic vehicle 202 can lift a bin 112 from a storage and retrieval system using a gripping device 510, in the form of a gripping plate, suspended from a first lifting device 520 by four first lifting bands 526. The gripping device 510 has actuatable grippers 512 that grip onto the bin 112 for lifting or lowering. In alternative examples, the gripping device 510 may releasably engage the bin 112 using any suitable mechanism, such as hooks, screws, electromagnets, etc. The first lifting bands 526 are connected to the gripping device 510 at corners of the gripping plate, using clasps, bolts, knots, etc. at fastenings 518. The gripping plate holds the grippers 512 in alignment with corresponding handles on the bin 112 that can be used to grip and lift the bin 112. In some examples, the grippers 512 can be actuated by microprocessors controlled by signals received along the first lifting bands. In alternative examples, the grippers 512 can be actuated wirelessly, or a purely mechanical grip such as a push-to-grip and push-to-release mechanism.

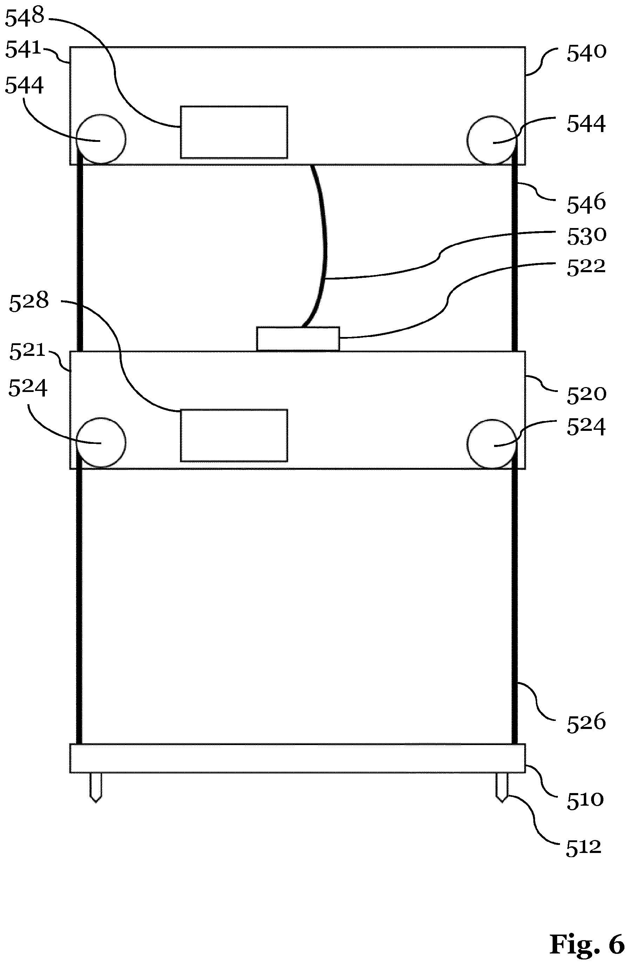

The first lifting bands 526 can be retracted and let out by the first lifting device 520 to raise or lower the gripping device 510. With reference to Fig. 6, the first lifting bands are wound and unwound on first spools 524. This is done by providing a torque to the first spools 524 to either wind the first lifting bands 526 onto the first spools 524, thereby retracting the first lifting bands 526 and raising the gripping device 510, or unwind the first lifting bands 526 off the spools 524, thereby letting out the first lifting bands 526 and lowering the gripping device 510. The first spools 524 are supported by a housing 521 of the first lifting device and are mounted on respective axels. The torque for rotating the spools 524 and raising or lowering the gripping device 510 is provided to the spools by a first electric motor 528, either directly or via a torque transmission mechanism (not shown). A torque transmission mechanism may comprise a combination of axels, gears, bevel gears, screw gears, belts, or the like, as known in the art suitable for transmitting a torque from one location to another and/or altering the angle of rotation.

In some examples, such as shown in Fig. 6, the first electrical motor 528 receives electrical power via an electrical connection such as a first electrical connector 522 and a connection cable 530. The connection cable 530 connects to an electrical power supply, such as a battery, in the body 300 of the robotic vehicle 202 or in the second lifting device 540, via any suitable connector (not shown). The connection cable 530 may be any suitable cable for transmitting power, and may optionally also transmit data and/or control signals to and from the first lifting device 520. The first electrical motor 528 is electrically connected to the first electrical connector 522 using any suitable means (not shown) known in the art, e.g. wiring, PCBs, etc., or some combination thereof. In some examples, the connection cable 530 is stored on a reel (not shown) in the second lifting device 540 and is let out as the first lifting device 520 is lowered by the second lifting device 540, and retracted as the first lifting device 520 is raised. The retraction may be automatic, e.g. due to a spring-loaded reel, or may be powered. In some other examples, the connection cable is coiled on top of the first lifting device 520 and uncoils and recoils as the first lifting device 520 is raised or lowered with respect to the second lifting device 540.

Referring again to Fig. 5, the first lifting device 520 is suspended from the second lifting device 540 by four second lifting bands 546. The ends of the second bands 546 are connected to the first lifting device 520 at the corners of the first lifting device, for example, clasped, bolted, tied, etc., onto the housing 521 of the first lifting device 520 at fastenings 528. The second lifting bands 546 can be retracted and let out by the second lifting device 540 to raise or lower the first lifting device 520. With reference to Fig. 6, the second lifting bands 546 are wound and unwound on second spools 544 in a similar manner as described above for the first lifting device. In particular, a torque is provided to the second spools 544 to either wind the second lifting bands 546 onto the spools 544, thereby retracting the second lifting bands 546 and raising first lifting device 520 and the gripping device 510 with it, or unwind the second lifting bands 546 off the spools 544, thereby letting out the second lifting bands 546 and lowering the first lifting device 520 and the gripping device 510. The second spools 544 are supported by a housing 541 of the second lifting device 540 and are mounted on respective axels. The housing 541 may be integral to the body 300 of the robotic vehicle 202 or the cantilever arm 306, or may be positioned beneath the cantilever arm 306. In a robotic vehicle 204 having an internal cavity for receiving a bin 112, the first lifting device 520 and second lifting device 540 are positioned at the top of the internal cavity, so that the gripping device (and first lifting device) can be lowered through the internal cavity and underneath the robotic vehicle 204 to pick up a bin 112 and raise it into the internal cavity for transportation.

The torque for rotating the second spools 544 and raising or lowering the first lifting device 520 and the gripping device 510 is provided to the spools from the second electrical motor 548 of the robotic vehicle, for example, the motor used for locomotion or a separate dedicated lift motor. The torque may be supplied to the second spools 544 using any suitable combination of axels, gears, bevel gears, screw gears, belts, or the like, as known in the art suitable for transmitting a torque from one location to another and/or altering the angle of rotation. In some examples, the robotic vehicle 202 has a dedicated motor power supply, e.g. a battery, for providing electrical power for the second electrical motor 548. In some examples, the second electrical motor 548 receives electrical power from the main power supply of the robotic vehicle 202.

The first and second lifting bands are each connected, at a first end to the corresponding first or second spool so that rotating the spool will wind the lifting band onto the spool. The opposite end of each lifting band is connected to the corresponding fastening 518, 528 of the gripping device 510 or first lifting device 520. The lifting bands may be made from any suitable material, such as plastic, metal, rubber, composites, etc., having the appropriate flexibility, thickness, tensile strength for the required implementation.

In examples where signals are carried to the gripping device 510 for control of the grippers 512 through lifting bands, the first lifting bands 526 and second lifting bands 546 are conductive, or at least comprise a conducting material to transmit electrical signals from the control system of the robotic vehicle 202. In these examples, the first lifting device may comprise an electrical connection between the second lifting bands 546 and the first lifting bands 526 for transmitting the signal therebetween and so that the signal is transmitted on to the grippers 512 to control the grip or release the bin 112.

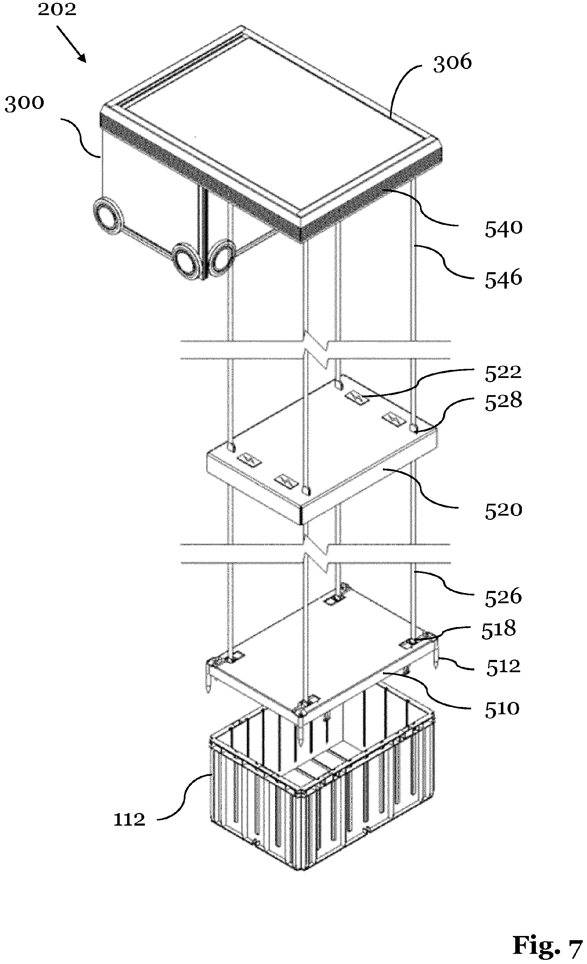

With reference to Fig. 7, in some examples, the first electrical connector 522 comprises four first electrical contacts for contacting corresponding second electrical contacts (not shown) on the underside of the second lifting device 540. The electrical contacts may be instead of, or in addition to, the connection cable 530 described above with reference to Fig. 5 and 6. In these examples, the electrical connection for powering the first electrical motor 528 is not permanent and the first lifting device 520 has a battery 529 (not shown in Fig. 7) or other internal power source for powering the first electric motor 528. The first electrical contacts contact the second electric contacts when the first lifting device 520 is raised to the second lifting device (e.g., when the second lifting bands 546 are retracted). When in contact, the second contacts provide electrical power to recharge the battery 529 and/or to directly power the first electrical motor 528. The second electrical contacts are connected, in the second lifting device 540 and/or the body 300, to an electrical power supply of the robotic vehicle 202. The rate and amount of transfer of power through the contacts may be controlled by the control system of robotic vehicle 202.

In some examples, the first lifting device 520 comprises more or fewer than four first electrical contacts as is shown in Fig. 7. For example, in some examples, there is one first electrical contact. In general, each first electrical contact is paired with a corresponding second electrical contact. In some examples, the first electrical connector 522 may comprises one or more plug and socket connector instead of electrical contacts as shown in Fig. 7, or any other suitable form of electrical connection.

Fig. 5, 6, and 7 show one kind of lifting mechanism, however, it will be appreciated that alternative lifting mechanisms are possible. For example, although the lifting devices described above use four lifting bands, a different number or arrangement could be used and still provide the necessary support for the gripping device or first lifting device to be lifted. In some examples, the first lifting device and/or second lifting device do not comprise an enclosed housing but the components thereof are supported by a frame or other supporting structure. In some examples, the gripping device 510 is not a gripping plate but a frame or other structure. In some examples, the torque for raising or lowering the gripping device or first lifting device is provided to all spools equally and, in other examples, one or a subset of the spools have the torque applied thereto.

In some examples, the robotic vehicle comprises one or more brake to control a rate of rotation of the set of first spools and/or of the set of second spools. Brakes may be applied to all of the spools or a subset of the spools. The brakes may be configured to impinge on the axle of the corresponding spools to control the rate of rotation of the corresponding spool or spools. The brakes may be drum brakes, hydraulic brakes, disc brakes, friction brakes, electromagnetic brakes, etc., or a combination thereof. The brakes may be controlled by the control system of the robotic vehicle.

In some examples, the robotic vehicle comprises a holding mechanism configured to hold the first lifting device in a fixed position relative to the second lifting device, referred to herein as a first configuration. In examples having electrical contacts as described above with reference to Fig. 7, this maintains the electrical connection between first contact(s) and the second contact(s) for reliable transfer of power. In some examples, the holding mechanism comprises a clip or clasp that can be electrically actuated when the first lifting device is in the configuration, e.g. by the second lifting device raising the first lifting device. In some examples, instead of a mechanical holding mechanism, the holding mechanism comprises one or more electromagnets that selectively hold the first lifting device in the first configuration. In some examples, the holding mechanism may use the brakes to prevent the second spools from rotating and thereby hold the first lifting device in place by means of tension in the second lifting bands.

In some examples, the first lifting device is an auxiliary lifting device as described in more detail below. As such, the robotic vehicle comprises a second gripping device (referred to as a principal gripping device of a principal lifting device), wherein the second lifting device is configured to raise and lower the second gripping device. The first lifting device comprises a frame configured to support the first electrical motor. The frame comprises a handle for releasable engagement by the second gripping device of the robotic vehicle.

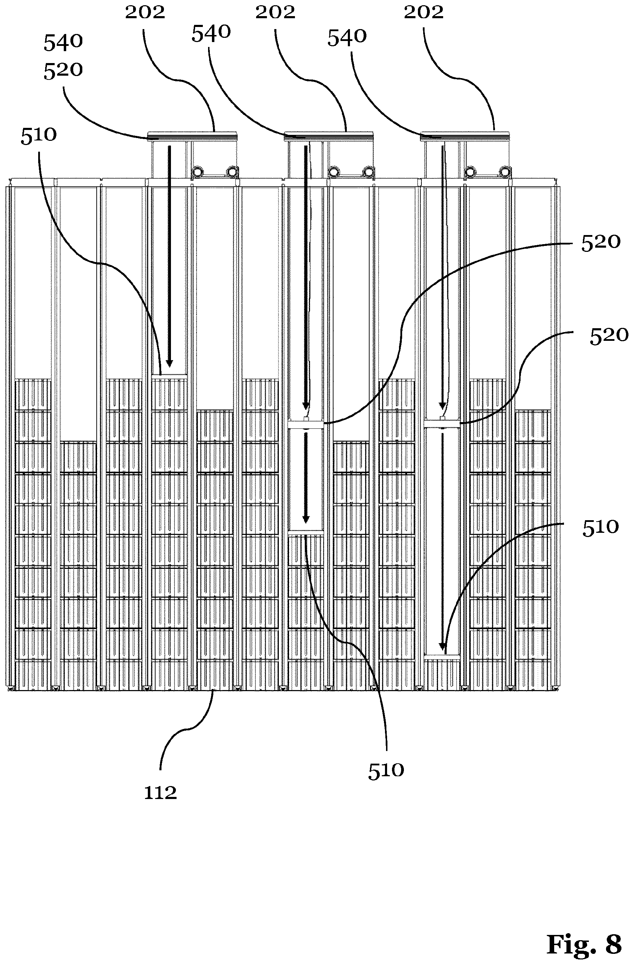

With reference to Fig. 8, in a first configuration (e.g., see the robotic vehicle 202 on the left in Fig. 8), the first lifting device 520 is in a raised position and the first lifting device raises or lowers the first gripping device 510.

In a second configuration (e.g., see the robotic vehicle 202 in the middle in Fig. 8), both the first lifting device 520 and second lifting device 540 are in use, i.e. both the first lifting bands 526 and the second lifting bands 546 have been at least partially let out from the respective lifting device. In particular, the robotic vehicle 202 in the middle in Fig. 8 has fully let out the second lifting bands 546, such that they are hanging by their attachments to the second spools, and partially let out the first lifting bands. Using the second configuration, the gripping device 510 can extend below the depth that either lifting device is capable of individually and the height of stacks of bins 112 that the robotic vehicle 202 can retrieve from is greater due to the robotic vehicle 202 having multiple lifting devices.

In a third configuration (e.g., see the robotic vehicle 202 on the right in Fig. 8), the first lifting device 520 has fully let out the first lifting bands 526 and the second lifting device 540 has fully let out the second lifting bands 546, such that the gripping device 510 has descended to the maximum depth of the first and second lifting devices, and can collect a lowermost bin 112 from the storage and retrieval system. In container storage and retrieval systems having multiple vertical levels, e.g. across multiple stories of a building, the additional lift depth can be used to pass a bin 112 through an opening in the floor of an upper level and into the part of the system on a lower level. As the two lifting devices can be used simultaneously, i.e., the lifting devices are in series, the first and second electrical motors actions combine to provide a greater maximum lift speed than either motor could provide individually.

Any of the robotic vehicle features described throughout the above apply to both robotic vehicles 202, 204 having a cantilever arm 306 or an internal cavity 310. Where any feature is shown or described as underneath the cantilever arm 306 of a robotic vehicle 202, such as the first and second lifting devices, the feature can instead be at the top of the internal cavity 310 of a robotic vehicle 204.

### Methods for operating a robotic vehicle

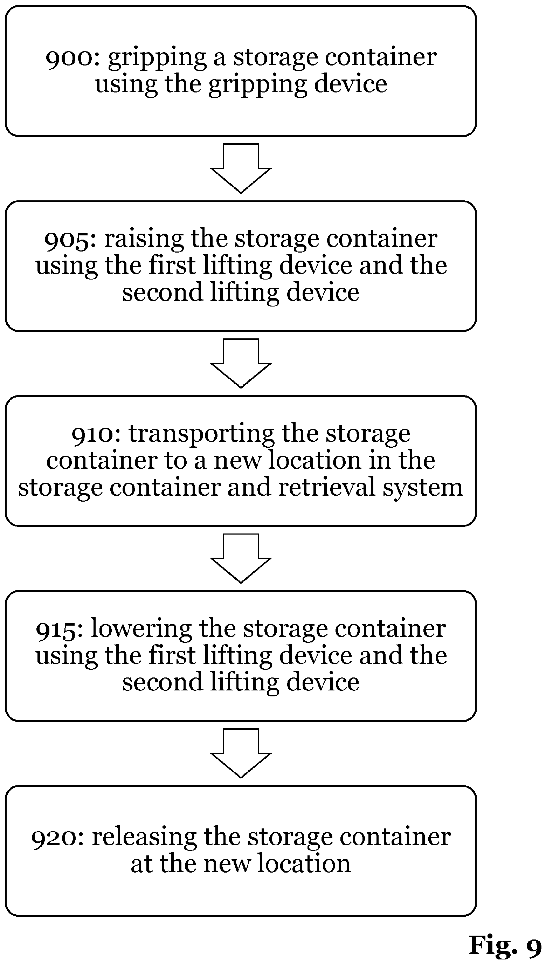

With reference to Fig. 9, a method of operating a robotic vehicle according to any of the examples described above comprises gripping 900 a storage container 112 using the gripping device 510. The method comprises raising 905 the storage container 112 using the first lifting device 520 and the second lifting device 540. This may be using either or both of the first and second lifting device. The method comprises transporting 910 the storage container to a new location in the storage container and retrieval system. In general, this comprises the robotic vehicle travelling along the rail system to the destination. The method comprises lowering 915 the storage container using the first lifting device and the second lifting device. This may be using either or both of the first and second lifting device. The method comprises releasing 920 the storage container at the new location. The new location may be another storage position or may be a port 130, 132 for removing items from the bin 112. The gripping and releasing of the bin may be controlled by electric signals sent down the first and second lifting bands.

The method may be instructed by a processing system 400 as described above with reference to Fig. 4, such as the control system (not shown) of the robotic vehicle and/or from a remote control centre in communication with the robotic vehicle. The instructions for performing any of the methods described herein may be stored in a computer-readable medium, e.g. instructions 422 on machine-readable storage media 428 as described above with reference to Fig. 4 (e.g. one or more non-transitory computer-readable storage media).

Any of the methods described above apply to robotic vehicles 202, 204 having either a cantilever arm 306 or an internal cavity 310.

### Auxiliary lifting device

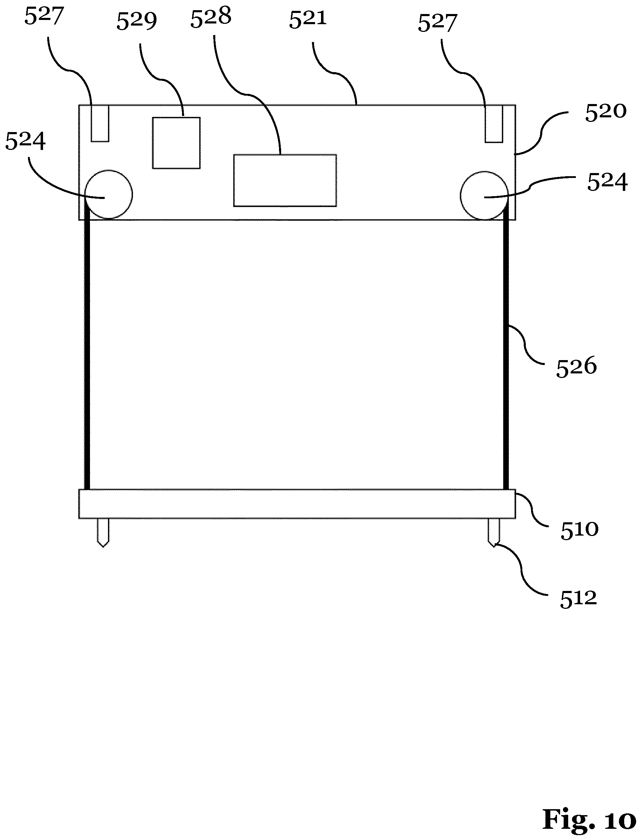

With reference to Fig. 10, an auxiliary lifting device 520 can be used a first lifting device as described previously with reference to Fig. 5-9. The auxiliary lifting device comprises the gripping device 510, the grippers 512, the first lifting bands 526, the first spools 524, the housing 521, and the first electrical motor 528 as described above, including any of the variations and alternatives described above. The auxiliary lifting device 520 comprises handles 527 for being gripped by a second gripping device of a robotic vehicle 202, also referred to herein as the principal gripping device of the principal lifting device. In some examples, the handles 527 are recesses in the housing 521 having the same shape, form, and/or function of the handles of the bins 112 of the storage and retrieval system. In some examples, the handles 527 comprise loops, clips, push-to-grip mechanisms, releasable electromagnetic connections etc. or some combination thereof.

In some examples, a frame is used having a different form to the housing 521, e.g., the frame may comprise struts and fastenings to support the components of the auxiliary lifting device 520 that are to be raised and lowered by a robotic vehicle.

In some examples, the auxiliary lifting device 520 comprises an electrical connector 522 to releasably connect to the robotic vehicle 202 to provide power for the first electrical motor 528. In some examples, the auxiliary lifting device 520 comprises an electrical connection between the handles 527 and the first electrical motor 528 so that power for the first electrical motor can be provided from the robotic vehicle when being used by the robotic vehicle. In either of these examples, the auxiliary lifting device 520 may not comprise a battery 529 as the power for the first electrical motor can be provided by the robotic vehicle.

In some examples, the auxiliary lifting device (and, in particular, its battery 529) can be recharged while not being used. For example, the auxiliary lifting device may be stored at a charging point until a robotic vehicle requires it to reach to greater depth. The electrical connector 522, either for connecting to a cable or contacting with a contact, may be used to recharge the battery 529 in an auxiliary lifting device recharging dock.

In some examples, the auxiliary lifting device 520 comprises a controller (not shown) configured to control raising and lowering of the gripping device 520, e.g., including the grippers 512, first electrical motor 528, brakes, etc. The auxiliary lifting device may comprise a communication module (not shown) configured to receive (and optionally transmit) data and/or instructions for the controller to operate the auxiliary lifting device in coordination with the robotic vehicle that it is to be lifted by. The communication module may communicate wirelessly with the robotic vehicle and/or may communicate through a wired communication that connects when the robotic vehicle engages the auxiliary lifting device and disconnects when the robotic vehicle disengages.

In some examples, the auxiliary lifting device 520 may have a single handle 527, two handles 527, or another number of handles 527 different than is shown in Fig. 10.

### Method of operating an auxiliary lifting device

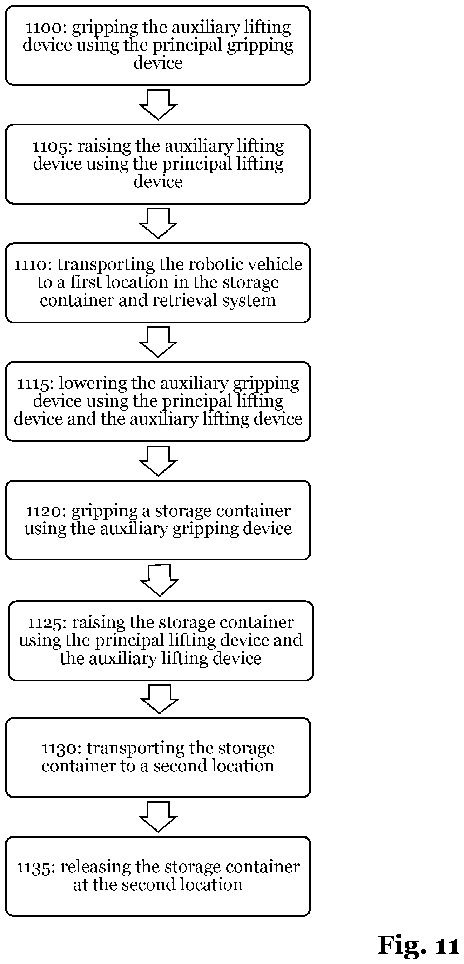

With reference to Fig. 11, a method for operating an auxiliary lifting device as described above using a robotic vehicle comprises gripping 1100 the auxiliary lifting device using the principal gripping device. The method comprises raising 1105 the auxiliary lifting device 520 using the principal lifting device 540. In general, the auxiliary lifting device 520 is raised to above the grid 100 (above the rails and under the cantilever arm or into the internal cavity). The method comprises transporting 1110 the robotic vehicle to a first location in the storage container and retrieval system, i.e., across the rail system 116 above the grid 100. The method comprises lowering 1115 the auxiliary gripping device 510 using the principal lifting device 540 and the auxiliary lifting device 520. The method comprises gripping 1120 a storage container using the auxiliary gripping device 520. The method comprises raising 1125 the storage container using the principal lifting device 540 and the auxiliary lifting device 520. The method comprises transporting 1130 the storage to a second location. The method comprises releasing 1135 the storage container at the second location. The gripping and releasing of the storage container or auxiliary lifting device may be controlled by electric signals sent down the lifting bands, another wired connection, or wirelessly. The first or second location may be a storage position or may be a port 130, 132 for inputting or removing items from the storage container 112.

In some examples, the method further comprises raising the auxiliary lifting device 520 and auxiliary gripping device 510 to above the grid (using the principal lifting device), transporting the auxiliary lifting device 520 across the grid on the rail system and lowering and releasing the auxiliary lifting device 520. The auxiliary lifting device 520 may be released to the same location where it was picked up from, a charging point, or at a different location where it has been determined that it will be required next.

Any of the variations and additional features described above with reference to Fig. 9 also apply to the method of operating the auxiliary lifting device 520, with the auxiliary lifting device 520 taking the role of the first lifting device 520.

The methods described above may be instructed by a processing system 400 as described above with reference to Fig. 4, such as the control system (not shown) of the robotic vehicle and/or from a remote control centre in communication with the robotic vehicle. The instructions for performing any of the methods described herein may be stored in a computer-readable medium, e.g. instructions 422 on machine-readable storage media 428 as described above with reference to Fig. 4 (e.g. one or more non-transitory computer-readable storage media).

The method described above applies to robotic vehicles 202, 204 having a either a cantilever arm 306 or an internal cavity 310.

Any parts of the robotic vehicles, auxiliary lifting devices, systems or methods described herein that have not been specifically described can have any suitable form, structure, function, material, etc., such as is known in the art and/or described in earlier publications in the name of AutoStore Technology AS.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for handling storage containers in a container storage and retrieval system, the robotic vehicle comprising:
a gripping device configured to releasably engage a storage container;
a first lifting device configured to raise and lower the gripping device, wherein the first lifting device comprises a first electrical motor configured to provide power to raise and lower the gripping device; and
a second lifting device configured to raise and lower the first lifting device, wherein the second lifting device comprises a second electrical motor configured to provide power to raise and lower the first lifting device.

2. The robotic vehicle of claim 1, wherein the first lifting device comprises:
a set of first spools, wherein the first electrical motor is configured to supply a torque to the set of first spools thereby raising or lowering the gripping device;
a set of first lifting bands, wherein each first lifting band is connected, at a first end, to a corresponding first spool and, at a second end opposite the first end, to the gripping device.

3. The robotic vehicle of claim 1 or 2, wherein the second lifting device comprises:
a set of second spools, wherein the second electrical motor is configured to supply a torque to the set of second spools thereby raising or lowering the first lifting device; and
a set of second lifting bands, wherein each second lifting band set is connected, at a first end, to a corresponding second spool and, at a second end opposite the first end, to the first lifting device.

4. The robotic vehicle of any preceding claim, wherein the first lifting device comprises a battery configured to power the first electrical motor.

5. The robotic vehicle of any preceding claim, wherein the second lifting device is housed by a body of the robotic vehicle, wherein the robotic vehicle comprises:
an electrical connection between the body of the robotic vehicle and the first lifting device for transmitting power to the first electrical motor.

6. The robotic vehicle of any preceding claim, wherein the robotic vehicle comprises a second gripping device, wherein the second lifting device is configured to raise and lower the second gripping device, wherein the first lifting device comprises a frame configured to support the first electrical motor, wherein the frame comprises a handle for releasable engagement by the second gripping device of the robotic vehicle.

7. A container storage and retrieval system comprising:
a structure defining a plurality of storage columns for stacking storage containers in;
a storage grid above the storage columns; and
the robotic vehicle of any of claims 1 to 6 configured to traverse the storage grid and handle storage containers.

8. A method of operating a robotic vehicle according to any of claims 1 to 6, the method comprising:
raising or lowering the gripping device; and/or
raising or lowering the first lifting device.

9. The method of claim 8, wherein the method comprises:
raising or lowering the gripping device and raising or lowering the first lifting device simultaneously.

10. The method of claim 8 or 9, the method comprising:
gripping a storage container using the gripping device;
raising the storage container using the first lifting device and the second lifting device;
transporting the storage container to a new location in the storage container and retrieval system;
lowering the storage container using the first lifting device and the second lifting device;
releasing the storage container at the new location.

11. An auxiliary lifting device for lifting storage containers in a container storage and retrieval system, the auxiliary lifting device configured to be handled by a robotic vehicle in the container storage and retrieval system, the auxiliary lifting device comprising:
an auxiliary gripping device configured to releasably engage a storage container;
an electrical motor configured to provide power to raise and lower the gripping device;
a frame configured to support the electrical motor, wherein the frame comprises a handle for being gripped by a gripping device of the robotic vehicle.

12. The auxiliary lifting device of claim 11, comprising:
a battery configured to power the electrical motor; and/or
an electrical connector configured to receive power for the electrical motor.

13. The auxiliary lifting device of claim 11 or 12, comprising:
a set of first spools, wherein the electrical motor is configured to supply a torque to the set of first spools thereby raising or lowering the gripping device;
a set of first lifting bands, wherein each first lifting band is connected, at a first end, to a corresponding first spool and, at a second end opposite the first end, to the auxiliary gripping device.

14. A method of operating an auxiliary lifting device of any of claims 11 to 13 using a robotic vehicle, the robotic vehicle comprising:
a principal gripping device configured to releasably engage a storage container and configured to releasably engage the auxiliary lifting device; and
a principal lifting device configured to raise and lower the vehicle principal gripping device,
the method comprising:
gripping the auxiliary lifting device using the principal gripping device;
raising the auxiliary lifting device using the principal lifting device;
transporting the robotic vehicle to a first location in the storage container and retrieval system;
lowering the auxiliary gripping device using the principal lifting device and the auxiliary lifting device;
gripping a storage container using the auxiliary gripping device;
raising the storage container using the principal lifting device and the auxiliary lifting device;
transporting the storage container to a second location; and
releasing the storage container at the second location.

15. A computer readable medium storing instructions for implementing the method of any of claims 8 to 10 or 14.
